# EUROPEAN PATENT SPECIFICATION

(11) **EP 3 123 411 B1**
(45) Date of publication and mention of the grant of the patent: **23.09.2020**
(21) Application number: 15717417.8
(22) Date of filing: 19.03.2015
(51) Int. Cl.: G06Q 10/02

(54) **DOUBLE-PROCESSING PREVENTION**
VORBEUGUNG VON DOPPELBUCHUNG
PRÉVENTION CONTRE LES DOUBLES RÉSERVATIONS

(30) Priority: 24.03.2014 EP 14290075; 24.03.2014 US 201414223047
(43) Date of publication of application: 01.02.2017
(73) Proprietor: Amadeus S.A.S., 06410 Biot (FR)
(72) Inventor: BIGOURDAN, Tristan, 06000 Nice (FR); BEAUCOUR, Guillaume, W68JG London (GB); GERACI, Frederic, 06370 Mouans-Sartoux (FR)
(74) Representative: Samson & Partner Patentanwälte mbB
(86) International application number: PCT/EP2015/000607
(87) International publication number: WO 2015/144300

(56) References cited:
- WO-A1-03/079243
- US-A- 5 784 562
- US-A1- 2006 080 670
- US-A1- 2010 082 823
- US-A1- 2012 203 579
- US-A1- 2013 066 948
- US-B1- 6 934 761

## Description

### FIELD OF THE INVENTION

The invention relates to methods and computer programs for preventing double-processing of requests in general, and, for example, to methods and computer programs for preventing double processing of a repeated request in a computer network.

### BACKGROUND

The Internet is used for transactions of various kinds, e.g. for electronic-commerce transactions, for example in the travel field for booking flights. The transactions use request-response protocols to exchange content, e.g. HTML documents over the Internet, such as the Hypertext Transfer Protocol (HTTP) which, in turn, relies on the TCP/IP protocols, collectively referred to as the "Web". In a transaction session formed by one or more related transactions a server (e.g. a travel-booking server) receives requests (which, for example, may be "booking requests") from a client and returns responses to the client.

Typically, a user uses a request-response application, also referred to as a browser application, enabling the client computer to send a request, such as a booking request to the server. It may happen that the server receives a request twice before the response to the first request is returned, for example if the user gets impatient, or experiences a temporary Internet outage, and refreshes or re-submits the initial request. In such cases there is a risk that the request, e.g. the booking request, is unintentionally processed twice, which is also referred to as "double processing" and, in the exemplary case of a booking transaction, as "double booking".

To prevent users from refreshing or resubmitting a request while it is still being processed it is common for the server to return an intermediate Web page displayed by the browser requesting the user to be patient and to refrain from any refreshing or resubmitting of the request.

US 2012/203579 A1 and WO 03/079243 A1 relate to double booking in general. US 5,784,562 A and US 2010/082823 A1 relate to session management in HTTP.

US 2013/0066948 A1 pertains to managing transactional sets of commands sent from a client to a server for execution. A first server reports logical identifiers that identify transactional sets of commands to a client. The first server commits information about a set of commands to indicate that the set has committed. A second server receives, from the client, a request that identifies the set based on the logical identifier that the client had received. The second server determines whether the request identified the latest set received for execution in a corresponding session and whether any transactions in the set have not committed. If any transaction has not committed, the second server enforces uncommitted state of the identified set by blocking completion of the identified set issued in the first session. The identified set may then be executed in the second session without risk of duplication.

US 2006/0080670 A1 pertains to a unilaterally-based interaction contract that enables applications to have a persistent state and ensures an exactly-once execution despite failures between and by communicating entities, permitting disparate software applications to be robustly supported in an environment where little is known about the implementation of the interaction contract. In one instance of the present invention, a web services interaction contract provides a communicating application with duplicate commit request elimination, persistent state transitions, and/or unique persistent reply requests. The present invention permits this interaction contract to be supported by, for example, a persistent application, a workflow, a transaction queue, a database, and a file system to facilitate in providing idempotent executions for requests from a communicating application.

### SUMMARY OF THE INVENTION

The invention is defined by the independent claims. Furthermore, optional and/or preferred embodiments are defined by the dependent claims.

Other features are inherent in the disclosed methods and products or will become apparent to those skilled in the art from the following description of examples and its accompanying drawings.

### BRIEF DESCRIPTION OF THE DRAWINGS

Embodiments of the present invention, with "booking requests" as an example of requests, are now explained, also with reference to the accompanying drawings, in which:
- Fig. 1: is a schematic overview of a first exemplary type of a client-computer and server-computer system which is the basis of various embodiments illustrated in Figures 2 to 5;
- Fig. 2: illustrates an embodiment with a repeated booking request caused by the user in a client-server computer system of the first type;
- Fig. 3: illustrates an embodiment similar to Fig. 2 in which mobile program code is sent to the client in order that booking-process status information is displayed at the client during booking processing;
- Fig. 4: illustrates an embodiment corresponding to that of Fig. 2 with booking confirmation;
- Fig. 5: illustrates an embodiment corresponding to that of Fig. 3 with booking confirmation as in Fig. 4;
- Fig. 6: is a schematic overview of a second exemplary type of a client-computer and server-computer system which is the basis of various embodiments illustrated in Figures 6 to 10;
- Figs. 7 to 10: illustrate embodiments similar to those of Figs. 2 to 5, however, in client-server computer systems of the second type shown in Fig. 6;
- Fig. 11: shows another embodiment similar to the embodiments of Figures 3 and 8, however, in a client-server computer system of a third type;
- Fig. 12: shows an exemplary computer system arranged to carry out the methodologies described herein.

Like reference signs refer to equal or analogous parts or activities throughout the drawings.

The drawings and the description of the drawings are of examples of the invention and are not of the invention itself.

### GENERAL DESCRIPTION OF EMBODIMENTS AND DESCRIPTION OF EXAMPLES

Prior to a detailed description of exemplary figures, some more general optional items will be described.

### Prevention of double processing; mainly server side

This description pertains to the prevention of double processing of a repeated request, for example a repeated booking request, from a client to a server in a transaction session (or briefly "session"), with a client and a server using a request-response protocol in a computer network.

A client-server transaction can be described from the client's perspective, the server's perspective, and from a higher-level perspective including both the client and the server. While the first independent method claim describes the method from the server's perspective, and the second independent method claim describes a specific embodiment of the method using mobile program code, the following description also takes the higher-level perspective including both the client and the server.

"Booking" is used herein in the context of exemplary transactions as a generic term for commercial transactions over computer networks also covering order, purchase, payment, and banking transactions.

In some embodiments, the computer network is the Internet. The communication between the client and the server may be secured, e.g. by encryption. The protocol used may, for example, be a hypertext transfer protocol, such as HTTP or HTTPS, based on TCP/IP (HTTP and HTTPS are jointly referred to as "HTTP" herein). Content exchanged may, for example, be in the form of a hypertext markup language, such as HTML or XHTML (HTML and XHTML are jointly referred to as "HTML" herein).

Transactions comprise one or more requests and responses which belong together and form what is called a session, or transaction session. For example, a transaction may be a booking transaction comprising several requests including registration, selection of goods or services, order confirmation, payment, etc.

Some request-response protocols, such as HTTP, are stateless. This means that the request-response protocol only links a single request to its response, thus establishing request-response pairs, but does not provide any functionality to take the history of requests into account and bind several request-response pairs together. In order that more than one request-response pair can be assigned to a transaction session, a session identifier can be defined for each transaction session, and associated with all the requests and responses belonging to that transaction session. For example, the session identifier can be included in all the requests and responses exchanged between the server and the client belonging to that transaction session.

It has already been mentioned that the method and its various variants, embodiments and examples for the prevention of double processing of a repeated request (for example, a repeated booking request) from a client in a transaction session described herein involve two entities, a server and a client, and the method comprises activities carried out at the server side and other activities carried out at the client-side. "Client" and "server", as used herein, do not refer to persons but rather to client computers and server computers, computer processes in the client and server computers using a client-server protocol, such as HTTP.

The client can be, for example, a browser able to take the role of the requestor in the request-response protocol, e.g. a Web browser, i.e. a software application for retrieving, presenting and traversing information resources on the World Wide Web. The browser, e.g. Google Chrome®, Mozilla Firefox®, Internet Explorer®, is able to communicate according to HTTP and display HTML documents.

In some embodiments, the browser is also able to execute mobile program code received in an HTTP response and embedded or referenced in an HTML document, such as mobile program code written in a script language interpreted by the browser, such as JavaScript®, or machine-independent bytecode interpreted by the client computer , such as a Java® applet. Code to represent Web pages expressed in a mark-up language, such as HTML, is not considered herein to be "mobile program code".

The server may be a Web server enabling the server computer system to take the role of the respondent in the request-response protocol, e.g. HTTP, such as an Apache® server. The server may be programmed to dynamically generate HTML documents to be sent to the client, and to carry out the server-side part of the methodologies described herein. The program may be in a server script language, such as Perl® or PHP®. The server may be in communication with external systems, such as other servers and/or databases in the background.

The server-side method comprises receiving a first, or initial, request, e.g. a booking request, such as a travel-booking request, from the client over the computer network, e.g. the Internet. The server-side process processes the first request (e.g. the booking request), i.a. by initiating the preparation of response data (e.g. booking-response data) for the client. In some embodiments, the processing of the request (in the example given: the processing of the booking) and the preparation of the response (e.g. the booking response) may be performed by the server. In other embodiments, however, the processing of the request (e.g. the processing of the booking) and the preparation of the response data (e.g. the booking-response data) is not performed solely by the server but includes co-operation of the server with external systems, such as other servers and/or databases in the background. For example, requests may include remote database queries. Exemplary booking and/or payment transactions may include, besides remote database queries, enquiries at credit-card payment providers, etc. Hence, in the latter embodiments the server only initiates the processing of the request (e.g. the processing of the booking) and the preparation of the response data (e.g. the booking-response data), e.g. by forwarding the contents of the request (e.g. the booking request), or parts of it, to external systems. In some embodiments, preparing the response data (e.g. the booking-response data) may therefore last several seconds, e.g. more than 10 or 20 seconds. Such jobs initiated by the first request (e.g. the first booking request) and preparing the response data (e.g. the booking-response data) are therefore also referred to as long-running jobs.

The "repeated request" is a repetition of the first request. For example, the "repeated booking request" is a repetition of the first booking request. It may happen that the first request (e.g. the first booking request) is sent again, due to maloperation by the user, for example when the user gets impatient since the long-running job does not immediately provide the response (e.g. the booking response). For example, an impatient user, while waiting for the response (e.g. the booking response), might repeat the first request (e.g. the first booking request) by refreshing it in the Web browser (by pressing a refresh key or clicking a refresh button), or by using the back button and then the forward button in the Web browser. Besides impatience, the repetition of a request (e.g. a booking request) might also be provoked by a temporary Internet outage causing the previous communication to be repeated. The repeated request is typically identical with the first request.

In some embodiments in which the client receives and executes mobile program code, rather than just HTML, the repetition of the first request may also be performed intentionally and automatically by the mobile program code, as will be explained in more detail below.

### Different connections

Conventionally, in the prior art, when a client, e.g. a Web browser issues a second request before the response to the first request has been received, the client will not receive or display the response to the first request because the TCP connection established between the client and the server to transmit the first request and its response will be closed when the second request is issued. Owing to this, the repetition of a request (e.g. the booking request) identical with the first might result in double processing of the request (e.g. double booking) without the user even being provided with an indication that double processing of the request (e.g. double) booking has occurred.

Double processing, such as double booking, due to repeated requests, e.g. repeated booking requests, is avoided in the server-side method described herein by two measures (i) and (ii) applied in combination, as follows: In response to the receipt of a repeated request (e.g. a repeated booking request) from the client (i.e. a repetition of the first (booking) request), (i) the server prevents the repeated (booking) request from initiating another processing of the request, such as another booking process; and (ii) the server assigns response data, such as booking-response data, prepared in response to the first request, e.g. a first booking request, or alternatively in response to a result request, such as a booking result request, to the repeated (booking) request or the (booking-)result request, and returns, in response to the repeated (booking) request or the (booking-)result request, a response to the client comprising the response data, e.g. the booking-response data mentioned above, prepared in response to the first (booking) request.

While the repeated (booking) request is identical with the first (booking) request (typically transmitted over a newly established TCP connection), the (booking-)result request is not a repetition of the first (booking) request but is distinct from the first (booking) request. It is therefore not identical with the first (booking) request.

In some embodiments, for example, the server processes the first request, e.g. a first booking request and stores the prepared result data at least temporarily in storage, for example in a database. This may be a step-wise process in which result data from various internal and/or external applications and sources is compiled. If a repeated (booking) request or a (booking-)result request is received, the server assigns the result data prepared in response to the first (booking) request to the second (booking) request or to the (booking-)result request, and returns the result data in response to the second(booking) request or to the (booking-)result request, respectively.

This can be considered to be "response swapping" because the client, technically at the request-response protocol level, gets no response to its first request but only to the repeated request or the result request, while the response contents (e.g. the booking-response contents) prepared at the server-side in response to the first (booking) request are swapped to the response to the repeated request or to the (booking-)result request to be sent to the client. Thereby, double processing of the request (e.g. double booking) is avoided.

This response swapping will be transparent (i.e. not recognizable) to the user. According to one alternative the response to which the result (e.g. the booking result) is swapped is a response to a repetition of the first (booking) request. In this alternative the transparency will be due to the identity of the first (booking) request with the repeated (booking) request; the contents of the (booking) response displayed to the user will be consistent with both the first and the repeated request.

According to the other alternative, the request is no repetition of the first (booking) request but is a different (booking-)result request; however, as the (booking-)result request is automatically generated at the client in some embodiments, without any user interaction, the user will get the impression that the response finally received and displayed by the client is a response to the first (booking) request.

The server-side method to prevent double processing, such as double booking, may be carried out by a server computer program, e.g. coded in a server script language such as Perl® or PHP®. The server computer program causes the server computer system to receive a first request, e.g. a first booking request, from the client application over the computer network and to process the first (booking) request, wherein the processing of the first (booking) request comprises initiating the preparation of response data for the client. In the event that the server receives a repetition of the first request, e.g. the first booking request, the computer program causes the server computer system to prevent the repeated (booking) request from initiating another processing of the request, e.g. another booking process, to assign the response data prepared in response to the first (booking) request to the repeated (booking) request or a (booking-)result request, and to return response data to the client in response to the repeated (booking) request, or the (booking-)result request, and prepared in response to the first (booking) request.

### Response swapping

In some embodiments the request-response protocol used in the transmission of the requests (e.g. the booking requests) and the responses to the (booking) requests is based on a connection-oriented transport protocol, such as TCP. In some embodiments the Web browser establishes a new transport-protocol connection (e.g. TCP connection) for each (booking) request and for the (booking-)result request, if applicable. This means, in these embodiments, that the first (booking) request is received by the server in a first transport-protocol connection, and the repeated (booking) request, or the (booking-result request, is received by the server in another transport-protocol connection different from the first transport-protocol connection. Therefore, in these embodiments the "response swapping" mentioned above means that the response data prepared in response to the first (booking) request is returned by the server within the other transport-protocol connection associated with the repeated (booking) request, or the (booking-)result request.

In some embodiments, a repeated request, e.g. a repeated booking request, is prevented from causing another processing of the response, e.g. another booking process, to be initiated by the interception of requests (e.g. booking requests) received at the server. In these embodiments the server ascertains whether a request (e.g. a booking request) is a repetition of a previous (booking) request which is still outstanding, i.e. to which no response with (booking-)response data has yet been returned. If the outcome is negative, i.e. if the request at issue, e.g. the booking request at issue, is found to be a first (booking) request rather than a repetition of a previous and still outstanding (booking) request, the server enables processing corresponding to the first request to be initiated (e.g. it enables a booking process corresponding to the first booking process to be initiated), for example by forwarding the (booking) request to a server provided to carry out the requested process - such as a booking server - so that a (booking) process is initiated. However, if the (booking) request at issue is found to be a repetition of a first (still outstanding) (booking) request, the server prevents another process (e.g. another booking process) corresponding to the repeated (booking) request from being initiated, e.g. by barring the forwarding of the (booking) request to a server provided to carry out the requested process, such as the booking server.

### Session identification

Recognizing that the first and the repeated requests (e.g. booking requests) belong together, and that the latter is a repetition of the first (booking) request, may be based on the assumption that two requests from the same client coming within a given maximum time interval (i.e. a maximum delay) from the first request belong to the same session. The client may be identified by the source IP address in the request, as it has a static IP address, or by a file with client-identification information stored at the client (a so-called "cookie") which is transmitted to the server along with the requests.

However, in some embodiments the recognition, by the server, that the first and the repeated requests, such as repeated booking requests, belong together, and that the latter is a repetition of the first (booking) request, is achieved on the basis of a session identifier. The session identifier is included in the first and the repeated (booking) requests. For example, in embodiments in which HTTP is used as the request-response protocol, the session identifier may be transmitted from the client to the server as a part of the URI (uniform resource indicator) in the first and the repeated (booking) requests.

In some of these embodiments, the session identifier is provided to the client. The server analyses session identifiers in requests (e.g. booking requests) received from the client. The server recognises a (booking) request as a repeated (booking) request, i.e. a repetition of a first (booking) request, on the basis of the session identifiers in the first (booking) request and the repeated (booking) request.

In some of these embodiments the session identifier is provided to the client before the first request, e.g. the first booking request, is received at the server (i.e. before it is sent by the client). The session identifier can, for example, be provided by the server storing a file with identification information (a "cookie") and session numbering information at the client or by including the session identifier in a Web page preceding the (booking) request and including a reference to a URI in which the session identifier is embedded. Clicking this reference will issue the first (booking) request to the server along with the session identifier in the URI.

### Mobile program code to display status information, such as booking-status information

The double-processing-prevention method and its various embodiments described so far do not require any special programming at the client side; they can be carried out at the client side by a Web browser not able to execute any mobile program code embedded or referenced in HTML documents, but only able to display HTML documents without embedded or referenced mobile program code, such as JavaScript® or Java® code. The client may therefore be a Web browser in which the execution of mobile program code in Web pages, such as JavaScript® and Java®, is disabled.

In some embodiments, the browser is also able to execute mobile program code received in an HTTP response and embedded or referenced in an HTML document, such as mobile program code written in a script language interpreted by the browser, such as JavaScript®, or machine-independent bytecode interpreted by the client computer, such as a Java® applet.

However, alternatively the double-processing-prevention method and its various embodiments described so far may use mobile program code received by the browser in an HTTP response, embedded or referenced in an HTML document, and written in a script language, such as such as mobile program code written in a script language interpreted by the browser, such as JavaScript®, or machine-independent bytecode interpreted by the client computer, such as a Java® applet. For security reasons, the mobile program code may be encapsulated in a particular region of the client-side computer and may have only limited rights to access any other computer system; this is also referred to as operation in a "sandbox". Code expressed in a mark-up language, such as HTML, is not considered herein to be "mobile program code".

The use of mobile program code at the client enables the server to take a more active role in the client-server communication, for example by enabling content to be pushed from the server to the client. In some embodiments the server push is an apparent push, realized by the client by repeatedly requesting the server whether the server wants to return content and receiving the server's responses, e.g. by means of repeated HTTP requests. Issuing repeated HTTP requests to the server may be caused by mobile code executing at the client in the background; i.e. enabling the browser to send requests to the server and handling the server responses without reloading the page in the process, i.e. in an asynchronous manner, e.g. using AJAX "Asynchronous JavaScript® and XML", also referred to as "AJAX", or "JavaScript® and JSON", also referred to as "AJAJ". In other embodiments a real server push is used, by the server sending messages to the client without having received a corresponding HTTP request from the client. This is based, for example, on direct communication between the server program at the server and the mobile program code at the client outside the HTTP protocol, e.g. by exchanging objects of the mobile program code (such a JavaScript® objects) using the existing TCP connection.

In some embodiments the server push functionality (be it an apparent or a real push) is used to display status information about the progress of the process initiated by the first request (e.g. of the booking process initiated by the first booking request) at the client. In these embodiments, processing of the first request further comprises (i) sending mobile program code to the client over the computer network in response to the first (booking) request, and (ii) sending status information indicative of a status of the processing of the first (booking) request over the computer network to the client; (iii) the status information being displayed by the mobile program code at the client.

When a first response (e.g. a first booking response) is received from the client, the server initiates the processing of the request, e.g. the booking process, for example by forwarding the (booking) request to an external server, such as a booking server, as explained above. The server also performs the activity (i), i.e. it embeds the mobile program code in an HTML document which it returns to the client in response to the first (booking) request.

While the processing of the request (e.g. the booking process) is ongoing, the activities (ii) and (iii) may be repeated several times, so that the client repeatedly gets updated status information and updates its display to reflect the current status of the processing of the request (e.g. the booking-request processing). For example, the status information may be in the form of a progressing status bar or clock which displays the progress of the ongoing (booking) process dynamically.

The client-server communication on the basis of the mobile program code executed at the server enables the client and server to establish long-lasting communication e.g. over a long-lasting transport-protocol connection (e.g. a TCP connection) between client and server. The transport-protocol connection may be established by the client for transmitting the first request (e.g. the first booking request), and may then be further sustained beyond the point of time when the HTML document with the mobile program code is received, over the entire period during which the mobile program code is executing. During the long-lasting transport-protocol connection the client may repeatedly receive (booking-)process-status updates, either pulled from the server by requests issued by the client (apparent push), or pushed by the server to the client (real push).

Although displaying progressively updated status information will reduce the risk that a user gets impatient, it still may happen that the first request, e.g. the first booking request, is re-submitted due to maloperation by the user, e.g. by refreshing the first (booking) request or by actuating the back button and then the forward button.

As described at the outset, upon receiving the repeated request (e.g. the repeated booking request), the server prevents the repeated (booking) request from causing another processing of the request (e.g. another booking process). In some of the embodiments with mobile program code executed at the client to present status information to the user, the repetition of the first (booking) request will cause the server to re-submit the same response which was already returned in response to the first request, i.e. said HTML document with the status-informing mobile program code.

Once the repeated request (e.g. the repeated booking request) is sent from the client, the execution of the mobile code in the first HTML document will be terminated, and the execution of the (same) mobile code then received in the HTML document re-submitted by the server will be initiated in the Web browser. Since the mobile code re-accesses and displays the current status information there will be a seamless transition of what is displayed. Hence, the user will not notice any significant effect of sending the repeated (booking) request.

When the process, such as a booking process, is finished at the server side, in some embodiments the result (i.e. the response data), e.g. the booking result in the form of booking-response data, is transmitted over the long-lasting transport-protocol connection to the client, and is then displayed by the mobile program code at the client. In other embodiments the mobile program code executing at the client is caused by the server to issue an HTTP request for the result, e.g. the booking result, once the (booking) process is finished at the server side. The server may trigger this HTTP request by sending an output-ready message to the client in response to the completion of the processing of the first (booking) request. There are two alternative ways (i) and (ii) for the mobile program code to generate this request:
- (i) In some embodiments the request for the (booking) result is only implicit; it is actually realized by a repetition of the first (booking) request that is automatically generated by the mobile program code in response to the output-ready message (it is therefore also referred to as "mobile-code-issued repeated request", or "mobile-code-issued repeated booking request").
- (ii) In other embodiments the request is an explicit result request different from the first request, such as an explicit booking-result request different from the first booking request; the mobile program code generates the result request in response to the output-ready message. The repeated (booking) request and the (booking-)result request may be HTTP requests. After having issued the repeated (booking) request or the (booking-)result request, the mobile program code terminates, i.e. passes control back to the Web browser. Hence, the server's response to the repeated (booking) request or the (booking-)result request is a new HTTP response directly loaded and displayed by the client's Web browser; it is not a response sent to the mobile program code and displayed by the mobile program code, since at that stage the mobile program code executed previously to provide updated status information, such as updated booking status information, has already terminated.

One of the reasons for providing the alternatives (i) and (ii) is as follows: Some Web browsers are restrictive and do not enable any HTTP requests to be generated from within mobile program code other than a refresh, which causes the previous HTTP request to be repeated. The alternative (i) deals with such restrictive Web browsers. Once the output-ready message is received, the mobile program code causes the refresh operation, whereupon the Web browser generates a repetition of the first request (such as the first booking request). When the server receives the repeated(booking) request at this stage (now being aware that the (booking) process has finished and the (booking) result can be provided to the client) it does not return the initial response with the status-informing mobile program code anymore. It now rather returns the (booking) result, e.g. as an HTTP response with the (booking-)response data.

Other embodiments implementing the alternative (ii) rely on less restrictive Web browsers which enable HTTP requests to be generated from within mobile program code; i.e. HTTP requests not restricted to a refresh of the previously submitted HTTP request. There may be a restriction which does not allow HTTP requests to other Web sites to be generated. Nevertheless, even under such a restriction, as long as the request is directed to a URI at the same Web site as the initial request (e.g. the initial booking request), the less restrictive Web browser allows a specific (booking-)result request to be generated, which has a different URI and/or content different from that of the first (booking) request. When the server receives the (booking-)result request it returns the (booking) result, e.g. as an HTTP response with the (booking-)response data.

### Redirection

As can be taken from the explanation above, in some embodiments using mobile-program code to present status information (e.g. booking-status information) to the user during the processing of the first (booking) request, the communication between the client and the server can be classified in two different types: One type relates to the first (booking) request and to the repeated (booking) request or (booking-)result request, which are HTTP requests. The other type relates to (booking-)status communication between the client and the server under the control of mobile-program code, in which the mobile-program code repeatedly issues requests for (booking-)status information and/or repeatedly receives (booking-)status information from the server. This other type of communication allows the server to push (booking-)status information by an apparent or actual push.

In some of these embodiments, a transition from the first communication type to the second communication type is performed after the server's response to the first request (e.g. a first booking request).

Accordingly, in some embodiments the server comprises a first functional module which intercepts requests (e.g. booking requests), also referred to as intercepting module, or "AsyncFilter", and a second functional module which mainly deals with (booking-)status information, also referred to as status-informing module, or "AsyncServlet". In response to the receipt of the first (booking) request (e.g. an HTTP request) at the intercepting module, a (booking) process is initiated corresponding to the first (booking) request, and the first (booking) request is also directed to the status-informing module. In some of these embodiments, if a repeated (HTTP-) request (such as a repeated (HTTP-)booking request), e.g. due to maloperation by the user, is received at the intercepting module at a stage before the processing of the first (booking) request has finished, the repeated (booking) request is re-directed to the status-informing module.

In some embodiments, the HTTP request for a result (e.g. a booking result), i.e. the (booking-)result request, is also handled by the server's intercepting module. Accordingly, when the first (booking) request is finished, the client is re-directed to the intercepting module by causing the repeated (booking) request or the (booking-)result request to be addressed to the intercepting module. The (booking-)response data prepared in response to the first (booking) request is swapped to the response to the repeated (booking) request or the (booking-)result request and is then returned to the client in response to the repeated (booking) request or the (booking-)result request.

### Confirmation

At the final stage of receiving and displaying the result (e.g. the booking result), an error could occur which might prevent the (booking) result from being displayed, which in turn might confuse the user as to whether the (booking) transaction has been successfully terminated, and prompt the user to re-submit the (booking) request.

In view of this, in some embodiments the response data (e.g. booking-response data) is not immediately discarded at the server once it has been submitted to the client. The (booking-)response data prepared in response to the first (booking) request is rather maintained in storage at the server. The client is caused to return a confirmation that the response to the client comprising the (booking-)response data has been received and displayed. The (booking-)response data prepared in response to the first (booking) request is only discarded at the server in response to a receipt of confirmation from the client over the computer network.

Such a confirmation may be automatically generated, e.g. by corresponding mobile-program code embedded or referenced in the HTML document containing the response (e.g. booking response) causing the client to send a confirmation message to the server once the (booking) response has been displayed. An alternative implementation of the confirmation functionality, which is not based on mobile program code, uses an HTTP redirect: the HTML document containing the (booking) response redirects the client to another URI at the server; the receipt of the redirected HTTP request is considered to be a confirmation that the (booking) result has been displayed at the client.

### Mobile code to display status information (e.g. booking-status information); mainly client side

While some of the embodiments of the server-side method do not require the client to be provided with any mobile-program code, in other embodiments the client is provided with mobile code adapted to the methodologies of the latter server-side embodiments.

Those embodiments therefore have a special counterpart at the client side, based on mobile program code to be executed at the client. From the client's perspective, embodiments of the method carried out by the client comprise sending a first request (e.g. a first booking request) to the server. The client then receives the mobile program code from the server over the computer network in response to the first (booking) request. Upon processing the mobile program code the client displays (booking) status information received over the network and indicative of a status of the processing of the first request, such as a first booking request. The displayed progress is repeatedly updated, on the basis of repeated communication between the client and the server to obtain (booking-)status updates. In response to the user causing a repetition of the (booking) request, the execution of the mobile program code is terminated, and the same mobile program code is received again with the response to the repeated (booking) request. The newly received mobile program code is started anew. As the newly started mobile program code will receive about the same status information from the server - apart from some small progress the server might have made in the meantime processing the first (booking) request - the transition from the first (booking) request to the repeated (booking) request appears to happen seamlessly, and will hardly be noticed by the user. In response to the receipt of an output-ready message from the server, the mobile program code in the client sends a repeated (booking) request or a (booking-result request to the server. The client then receives and displays (booking-)response data from the server in response to the repeated (booking) request or a (booking-)result request, and prepared in response to the first (booking) request.

### Response swapping: client side

As described above in connection with embodiments of the server-side method, in some embodiments of the client-side method the first request (e.g. the first booking request) is transmitted in a first transport-protocol connection to the server, and the repeated (booking) request or the (booking-)result request is transmitted in another transport-protocol connection different from the first transport-protocol connection to the server.

### Session identification: client side

In some embodiments a session identifier is included in the first and repeated requests (e.g. the first and repeated booking requests) and the (booking-)result request (if there is a (booking-)result request). The session identifier is received from the server prior to the sending of the first (booking) request, thereby enabling the server to recognise that the repeated (booking) request is a repetition of the first (booking) request on the basis of the session identifiers in the first and repeated (booking) requests, and that the (booking-)result request refers to the first (booking) request, if applicable.

### Confirmation: client side

In some embodiments, in response to the receipt and display of response data (e.g. booking-response data) prepared in response to the first (booking) request from the server over the computer network, the client sends a confirmation to the server that the (booking-)response data has been received and displayed.

### Server- and client-computer programs

In some embodiments, the server computer program is a Web server, such as an Apache® server, programmed, e.g. with a server script language, such as Perl® or PHP®, to dynamically generate HTML documents to be sent to the client, and to carry out the server-side part of the methodologies described herein. The server may be in communication with external systems, such as other servers and/or databases in the background. The server computer program may be stored in the server computer system on a non-transitory computer-readable storage medium, such as a magnetic disk.

The client computer program comprises, for example, a Web browser, i.e. a software application for retrieving, presenting and traversing information resources on the World Wide Web, and is able to communicate with a Web server in accordance with the HTTP protocol and to process and display HTML documents. Known Web browsers are, e.g., Google Chrome®, Mozilla Firefox®, Internet Explorer®. The client computer program further comprises mobile program code embedded or referenced in an HTML document received in an HTTP response from the server, such as JavaScript® code or Java® code. After receipt and during processing the client computer program is stored in computer-readable storage medium, such as in the client computer's main memory.

In the following examples illustrated by figures the prevention of double-processing of repeated requests is explained by booking requests. The explanation by means of booking requests is only exemplary.

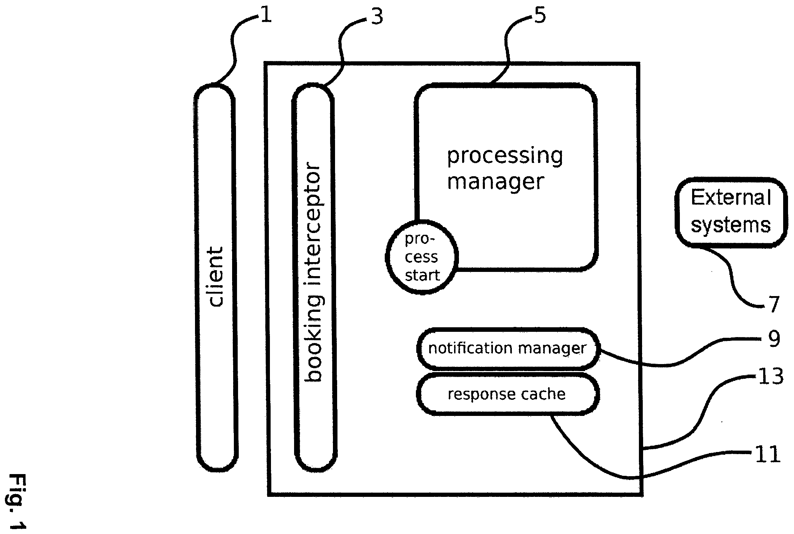

### Fig. 1: Overview, first type

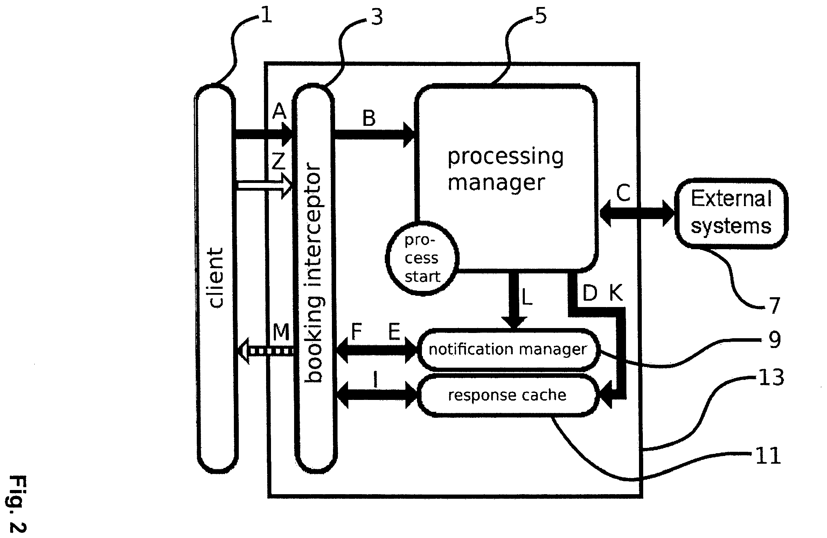

Returning to Fig. 1, a schematic overview of a first exemplary type of a client-computer and server-computer system is shown, which is the basis of various embodiments illustrated in Figures 2 to 5.

The system in Fig. 1 includes a server 13 to which a client 1 is connected via a network, such as the Internet. The server has a booking interceptor 3 that receives booking requests from the client 1, a processing manager 5 that receives booking requests from the booking interceptor 3 and starts the processing of these booking requests, as indicated by the label "process start". Furthermore, the processing manager 5 may have interfaces to external systems 7 for communication with other servers that may process parts of the booking process.

The server 13 further comprises an optional notification manager 9 that manages notifications to the client indicative of the status of the booking-request processing. The server 13 also comprises an optional response cache 11 in which response data prepared in response to a booking request may be stored. The booking-response data may be generated by the booking interceptor 3, the processing manager 5 and/or notification manger 9.

### Fig. 2: Repeated booking request, first type

Fig. 2 illustrates an embodiment based on the system of Fig. 1 with a repeated booking request caused by the user in a client-server computer system of the first type. The description of Fig. 1 also applies to Fig. 2.

The booking interceptor 3 of the server 13 receives a first booking request from client 1, labeled as "A", over the network, e.g. an HTTP request in a TCP connection established by the client 1. The first booking request may also contain a session identifier.

The booking interceptor 3 intercepts the first booking request, recognizes that it is a first booking request (rather than a repeated booking request in the same transaction), and therefore forwards the request to the booking manger 5, labeled as "B". The processing manager 5 initiates the processing of the first booking request, whereby it may co-operate with the external systems 7, labeled as "C", and also referred to as the "long-running job". The booking interceptor 3 also stores the first booking request, or a part of the first booking request, which enables a repetition of the first booking request to be recognized, such as a session identifier included in the first booking request. The processing manager 5 prepares booking-response data and/or receives booking-response data from the external systems 7, e.g. flight, car rental, hotel, etc. booking data, and stores the booking-response data in the response cache 11, labeled as "D". The processing manager 5 may inform the notification manager 9 about the current status of the booking, labeled as "L". The booking interceptor 3 may optionally initiate a notification process in the notification manger 9; this initiation is labeled as "E". The notification process informs the booking interceptor 3 about the status of the booking process, e.g. about finished parts of the booking-response data of the ongoing booking process, labeled as "F".

Fig. 2 also illustrates the case in which the server 13 receives a repeated booking request, labeled as "Z", while the booking processing initiated by the first booking process is still ongoing. This can be due to maloperation by the user; e.g. it may happen if the client performs a browser refresh, or if the link which caused the first booking request to be issued is clicked again, while the booking process is still ongoing. In this manner, the server 13 may receive two or more identical booking requests (HTTP requests) from the client 1. The client 1 establishes a new TCP connection to transmit the repeated request.

The booking interceptor 3 intercepts the repeated booking request. This may be, for example, by means of a session identifier in the repeated booking request which is the same as in the first booking request, the booking interceptor 3 associates the repeated booking request with the first (initial) booking request and considers it to be a repetition of the first booking request. Optionally, the booking interceptor may further ascertain whether this second request is indeed a repetition of the first request, e.g. by comparing it with the stored first request. If the booking interceptor 3 considers the second request to be a repetition of the first booking request, and if the first booking process is still ongoing, the interceptor 3 does not forward the booking request to the processing manager 5 to prevent another booking process from being initiated. Hence, the processing manager 5 continues to process the first booking request.

As mentioned, during the booking process, the processing manger 5 stores the booking-response data in the response cache 11. The booking-response data may be received from various external systems 7 at different points of time. This means the booking-response data may be received in an incremental manner; accordingly, the processing manager 5 may store the booking-response data incrementally in the response cache 11. The optional incremental generation of the complete booking result by transferring and storing parts of the booking result is labeled as "D" and "K". When the booking process has finished, the entirety of the stored parts of the booking result forms the complete booking result. Optionally, the processing manager 5 may repeatedly inform the notification manager 9 about the current status of the booking, labeled as "L".

The booking interceptor 3 and the response cache 11 maintain a single response wrapper object for a transaction session. Optionally, the response wrapper contains a single response object, wherein a response object represents a TCP connection between the client 1 and the server 13. When the repeated booking request is received, the first TCP connection (established by the client before the first booking request was sent) is broken. The response wrapper is thus updated with the new response object (representing the new TCP connection between the browser and the server, associated with the repeated request). Upon receipt of the repeated booking request, the booking interceptor 3 ascertains in the response cache 11 whether a first booking request is being processed; if the answer is positive, the booking interceptor 3 reassigns the booking-response data belonging to this session that are already stored and will be stored in the response cache 11 to the repeated booking request. By updating the response wrapper with the new response object the booking-response data, which are processed in response to the first booking request, are "swapped" to the repeated request. This may be achieved, for example, by assigning the booking-response data to the single response wrapper.

The booking-response data is forwarded from the response cache 11 to the booking interceptor 3, labeled as "I". In the case of a repeated booking request, the swapped booking-response data is forwarded from the response cache 11 to the booking interceptor 3, also labeled as "I". The booking interceptor 3 sends the booking-response data to the client 1, labeled as "M". In the case of a repeated request, the booking interceptor 3 sends the (swapped) booking-response data to the client 1 in response to the repeated request, i.e. within the TCP connection associated with the repeated request, also labeled as "M".

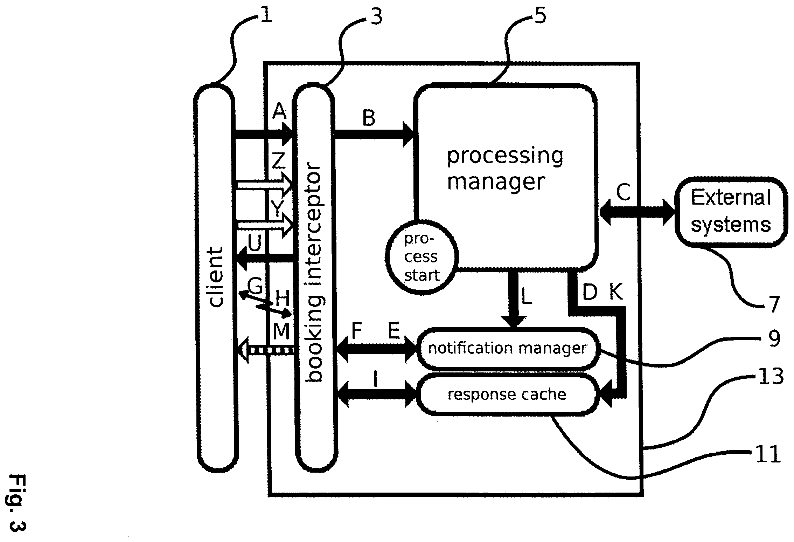

### Fig. 3: Booking-process status information, first type

Fig. 3 illustrates an embodiment in which mobile program code is sent to the client. The description of Figures 1 and 2 also applies to Fig. 3, in combination with the additions and variants described in this subsection dealing with Fig.3.

In the embodiments of Fig. 3 mobile program code is sent to the client. The mobile program code, when executed within the Web browser of the client, performs booking-status-related communication between the client and the server and causes information about the status of the booking process to be displayed at the client. Optionally, the mobile program code also automatically issues a repeated booking request, or a booking-result request, when the client is informed that the booking process has finished. This is now described in more detail.

In response to the first booking request the booking interceptor 3 sends, as an HTTP response, an HTML document with embedded or referenced mobile program code to the client 1, labeled as "U". The mobile program code may be code written in a script language interpreted by the browser, such as JavaScript®, or machine-independent bytecode interpreted by the client computer, such as a Java® applet. The client 1 executes the mobile program code within its Web browser.

The mobile program code enables booking-status information to be transferred to the client in a progressive manner while the booking process is still ongoing in the background, i.e. during the time period in which the processing of the booking request takes place. The progressive booking-status information is provided from the notification manager 9 and/or the response cache 11 to the booking interceptor 3. The booking interceptor 3 transmits the progressive booking-status information to the client 1.

The booking interceptor 3 of server 13 may effectively push the booking-status information and other information, such as an output-ready message, to the client 3. In some embodiments the server push is an apparent push, realized by the mobile program code at the client 3 by repeatedly requesting the server 13, by means of HTTP requests, to send updated booking-status information. In some embodiments, the repeated status-requests may actually be requests for booking-status updates, because it is sufficient for the mobile code to add update information to its status display. This activity is labeled in Fig. 3 as "H". All these requests may be transmitted within a TCP connection established by the client 1 with the first booking request and maintained open. In response to these requests issued by the mobile-program code, the booking inceptor 3 returns the requested booking status information, e.g. booking status updates, as HTTP responses to the client, labeled as "G". These booking status updates are indicative of the current status of the booking process being carried out in the background by the processing manager 5, e.g. in co-operation with the external systems 7. Technically, in this embodiment, the booking-status information is pulled by the client 1 from the booking interceptor 3. However, as the pull happens automatically and repeatedly, the content appears to be pushed to the client 1; therefore, it can be considered to be (effectively) a push.

In other embodiments a real server push is used, by the booking interceptor 3 sending messages with booking status information, which may be booking status updates, to the client 1, labeled as "G", without having received a corresponding HTTP request from the client 1. This is based, for example, on direct communication between the server program at the server 13 and the mobile program code at the client 1 outside the HTTP protocol, e.g. by exchanging objects of the mobile program code (such a JavaScript® objects) using the existing TCP connection.

Thus, technically, the booking-status information is either pulled by the client 1 from the booking interceptor 3, or pushed to the client 1 by the booking interceptor 3 within a TCP connection between client 1 and server 13 during the time period in which the processing of the booking request takes place.

The progressive booking-status information may be displayed to the user, and the display may be repeatedly updated, e.g. in the form of a progress bar; progress circle, or the like.

Although displaying progressively updated status information will reduce the risk that a user gets impatient, it still may happen that the first booking request is re-submitted due to maloperation by the user while the booking process is still ongoing, e.g. by refreshing the first booking request or by actuating the back button and then the forward button, as in Fig. 2. Hence, the server 13 receives two or more identical booking requests from the client 1. The re-submission of the first booking request is also labeled as "Z" in Fig. 3.

As in Fig. 2, the booking interceptor 3 has previously intercepted the first booking request, and initiated the processing of the first booking request. The booking interceptor 3 also intercepts the repeated booking request and recognizes that it is a repetition of the first booking request, while the first booking process is still ongoing, as in Fig. 2. Accordingly, the interceptor 3 does not forward the repeated booking request to the processing manager 5 to prevent another booking process from being initiated. Hence, the processing manager 5 continues to process the first booking request, as in Fig. 2.

Once the repeated booking request is sent from the client 1, the execution of the mobile code will be terminated. In response to the receipt of the repeated booking request, while the booking process initiated by the first booking request is still ongoing, the booking interceptor 3 re-submits the HTML document with the embedded or referenced mobile program code to the client 1, again labeled as "U" in Fig. 3. Upon receipt, execution of the (same) mobile-program code is started in the client's Web browser again. The newly started mobile program code re-accesses and displays the current status information. As this interruption of the mobile-program-code processing will be relatively short, the status of the booking processing will not have changed a lot; therefore, the apparent transition between what is displayed before and after a repetition of the booking request to the user will nearly be seamless.

The server may trigger this HTTP request by sending an output-ready message to the client in response to the completion of the processing of the first booking request.

Once the booking process initiated by the first booking request has finished, the processing manager 5 informs the notification manager 9 about the completion of the booking process, labeled as "L", which, in turn, informs the booking interceptor 3. Thereupon, the booking interceptor 3 sends an output-ready message to the client 1. In analogy with the transmission of the booking-status information, in some embodiments the output-ready message may be automatically pulled by the client 1 (which appears to be a push); in other embodiments it is actually pushed by the server 13 to the client 1.

The receipt of the output-ready message causes the mobile program code executing at the client 1 to issue another HTTP request in a new TCP connection, labelled as "Y", in order to obtain the final booking result. This other HTTP request causes the response cache 11, via the booking interceptor 3, to swap the booking-response data representing the final booking result prepared in response to the first booking request to this other HTTP request. The final booking result swapped to the other HTTP request is then forwarded to the booking interceptor 3 and returned by the booking interceptor 3 to the client 1 as an HTTP response to the other HHTP request, labeled as "M", i.e. within the new TCP connection established to transmit the other HTTP request, labeled as "M". After having issued the other HTTP request, the mobile program code terminates, i.e. relinquishes control to the Web browser.

There are alternatives embodiments (i) and (ii) of this other HTTP request generated in response to the output-ready message to obtain the final booking result:
- (i) In one embodiment the other HTTP request is a repetition of the first booking request automatically generated by the mobile program code in response to the output-ready message, i.e. a repeated booking request issued by mobile code. The server 13 deals with this mobile-code-issued repeated booking request in the same manner as with the user-initiated repeated booking requests of Fig. 3: The booking interceptor 3 intercepts the mobile-code-issued repeated booking request and recognizes that it is a repetition of the first booking request. However, as the booking interceptor 3 is now aware of the fact that the booking process has finished, it now returns the final booking result to the client 1 (rather than the HTML page with the status-displaying mobile program code), swapped to the HTTP response to the mobile-code-issued repeated booking request.
- (ii) In another embodiment the other HTTP request is not a repetition of the first booking request, but is a booking-result request different from the first booking request. The server 13 deals with the booking-result request in a manner similar to that of the user-initiated repeated booking requests of Fig. 3: The booking interceptor 3 intercepts the booking-result request and recognizes that it refers to the first booking request, e.g. by means of the same session identifiers in the first booking request and the booking-result request. The response cache 11 swaps the final booking result generated in response to the first booking request to the response to the booking-result request. The booking interceptor 3 returns the final booking result swapped to the HTTP response to the booking-result request.

The final booking result is then displayed by the client's Web browser. The booking result data is discarded from the response cache 11.

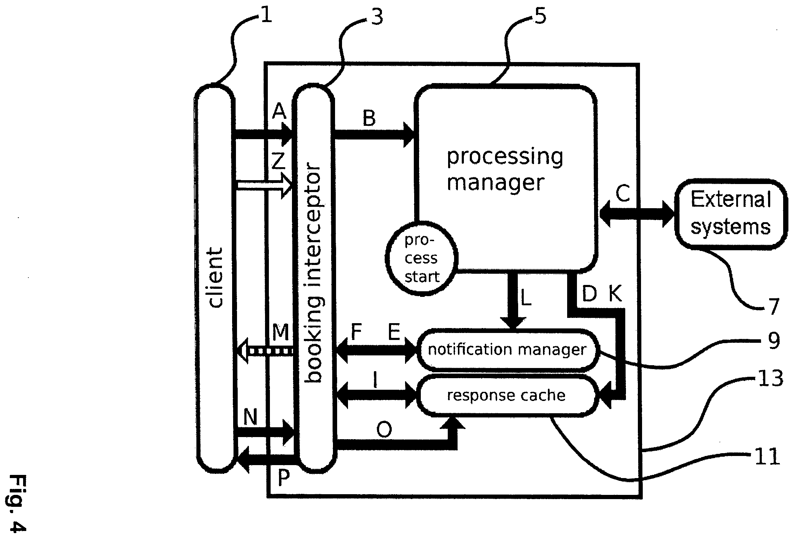

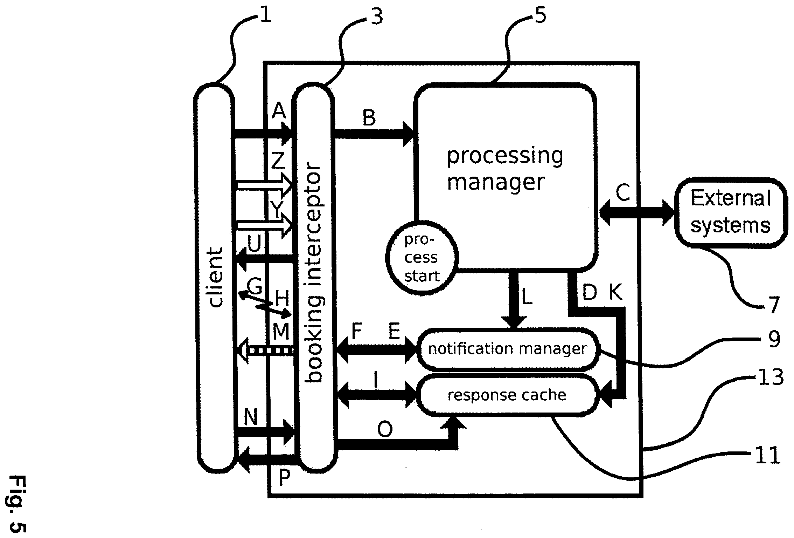

### Figures 4 and 5: Confirmation, first type

Figures 4 and 5 illustrate embodiments in which the client 1 returns a confirmation to the server 13 that the final booking result has been received and displayed at the client. Having received this confirmation the server 13 can be certain that the booking-response data for the booking transaction at issue are not needed for any further response-swapping activity anymore, and can therefore be discarded from the response cache 11.

The description of Figures 2 and 3 also applies to Figures 4 and 5, respectively, in combination with the additions and variants described in this subsection dealing with Figures 4 and 5.

The booking-response data is not immediately discarded from the response cache 13 after having been sent to the client 1. The storage of the booking-response data in the response cache 13 is rather extended to a point of time when a confirmation is received from the client 1 that the final booking result has been received and displayed at the client 1.

The client is required to return a confirmation that the response to the client comprising the booking-response data has been received and displayed. The booking-response data prepared in response to the first booking request is only discarded at the server in response to the receipt of the confirmation from the client over the computer network.

Such a confirmation, labeled as "N", is caused by the final HTTP response by which the client 1 receives the final booking result, labeled as "M". In one embodiment, the confirmation in the form of a confirmation HTTP request is achieved by an HTTP redirect order in the final booking response M which causes the client 1 to re-issue its previous HTTP request (which is the repeated booking request, or the booking-result request) to another URI of the booking interceptor 3. In another embodiment, the confirmation is achieved by mobile program code embedded or referenced in the final booking response M; this mobile program code is then executed in the client's browser and causes a confirmation HTTP request to be returned to the booking interceptor 3.

In response to the receipt of the confirmation from client 1, the booking interceptor causes the booking-response data prepared in response to the first booking request to be discarded from the response cache 11, labeled as "O".

Optionally, the server 13 may send a response to the confirmation to complete the HTTP request-response protocol, labeled as "P". In the absence of such a response to the confirmation, the browser at the client 1 could display an error notification (e.g. a timeout notification) which could leave the user in doubt whether the booking process was completed successfully.

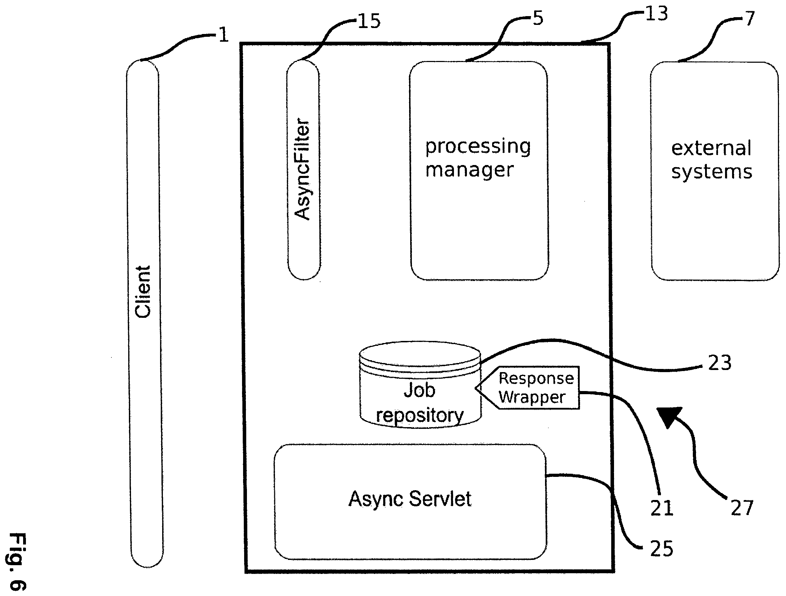

### Fig. 6: Overview, second type

Fig. 6 is a schematic overview of a second exemplary type of a client-computer and server-computer system. The description of Fig. 1 also applies to Fig. 6 in combination with the additions and variants described in this subsection dealing with Fig. 6.

In the second type of Fig. 6, the booking interceptor 3 of Figures 1 - 5 is subdivided into an asynchronous filter ("AsyncFilter") 15 and an asynchronous servlet ("AsyncServlet") 25. The functionalities of the notification manager 9 and the response cache 11 of Figures 1 - 5 are provided by the AsyncServlet 25 of Fig. 6, along with storage, referred to as job repository 23. The response wrapper mentioned as an optional functional element in the description of Fig. 2 is explicitly shown in Fig. 6 and labeled as 21.

The AsyncFilter 15 is mainly responsible for intercepting booking requests and, optionally booking-result requests (in embodiments in which the final booking result is requested by a booking-result request) and forwarding and re-directing such requests, while the AsyncServlet 25 is mainly responsible for providing booking-status information and the response-swapping function.

The entire client-server computer system is marked as "27" in Fig. 6.

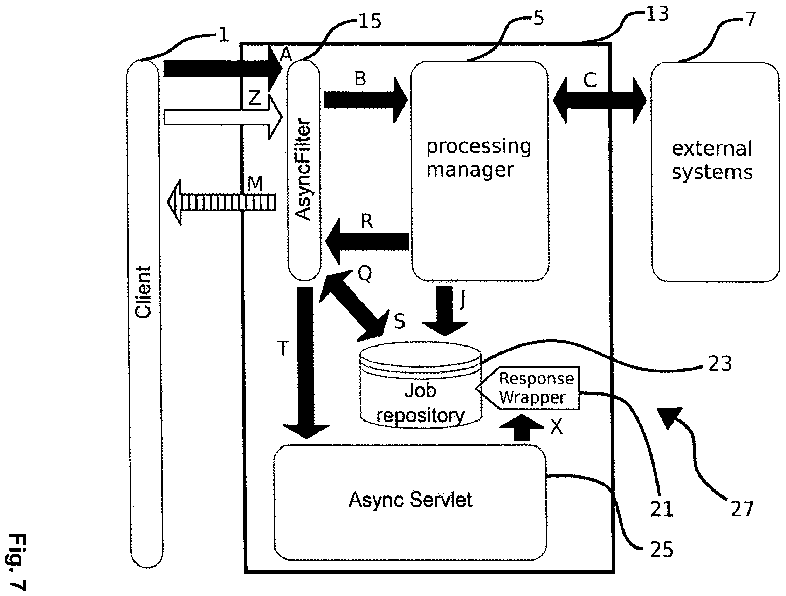

### Fig. 7: Repeated booking request, second type

Fig. 7 illustrates an embodiment similar to that of Fig. 2, however, in a client-server computer systems of the second type shown in Fig. 6. The description of Figures 2 and 6 also applies to Fig. 7 in combination with the additions and variants described in this subsection dealing with Fig. 7.

In the embodiment of Fig. 7 there is a first booking request, as in Fig. 2. The first booking request is received at the server 13 (labeled as "A") and intercepted, as in Fig. 2, but the interception is performed by the AsyncFilter 15. As in Fig. 2, if the AsyncFilter recognizes that the booking request is a first booking request (rather than a repeated booking request in the same transaction) it forwards the request to the booking manger 5, labeled as "B". As in Fig. 2, the processing manager 5 initiates the processing of the first booking request, whereby it may co-operate with the external systems 7, labeled as "C".

If the booking request is the first booking request in the booking transaction at issue, the AsyncFilter 15 also creates a new response wrapper 21 for this booking transaction in the job repository 23, labeled as "S". The response wrapper 21 is stored in the job repository 23. Assigned to the response wrapper 21 is a first response object which is associated with the first TCP connection established by the client 1 for transmitting the first booking request. The AsyncFilter 15 also notifies the AsyncServlet 25 about the new booking process started in the processing manager 5 and about the creation of the new response wrapper 21 in the job repository 23, labeled as "T".

During the booking process, the processing manger 5 stores booking-response data in the job repository 23, as in Fig. 2, labeled as "J". The AsyncServlet 25 logically assigns the stored booking-response data to the first response object associated with the response wrapper 21.

In the embodiment of Fig. 7 there may also be a repeated booking request while the booking processing initiated by the first booking process is still ongoing, as in Fig. 2.

The repeated booking request is received at the server 13 (labeled as "Z") and intercepted, as in Fig. 2, but the interception is performed by the AsyncFilter 15. The AsyncFilter 15 checks in the job repository 23 whether a response wrapper associated with the current transaction session already exists, e.g. on the basis of a comparison of the session identifier of the first request (which was stored with the response wrapper) with that of the repeated request. If the AsyncFilter 15 considers the second request to be a repetition of the first booking request, the AsyncFilter 15 does not forward the booking request to the processing manager 5 to prevent another booking process from being initiated, as in Fig. 2.

In the embodiment of Fig. 7, the AsyncServlet 25 is responsible for updating the response wrapper 21. To this end, the AsyncFilter 15 notifies the AsyncServlet 25 of the receipt of the repeated booking request, labeled as "T". Thereupon, the AsyncServlet 25 swaps the booking result for this transaction already stored and still to be stored in the job repository 23 from the first response object to a new response object which is associated with the new TCP connection established by the client 1 for transmitting the repeated booking request; the AsyncServlet 25 thereby updates the assignment of a response object to the response wrapper 21, labeled as "X", so that the content of the response wrapper 21 correctly refers to the actual HTTP request to which the final booking response has to be returned.

The processing manager 5 notifies the AsyncFilter 15 once the booking process has finished, labeled as "R". The AsyncFilter 15 then reads the final result of the booking process from job repository 23, labeled as "Q", and sends an HTTP response with the final booking result to the client 1, labeled as "M", on the basis of the updated response wrapper 21. The use of the updated response wrapper ensures that the booking response, which is the result of the first booking request, is correctly transmitted as a response to the repeated booking result. The final booking result is then displayed by the client's Web browser.

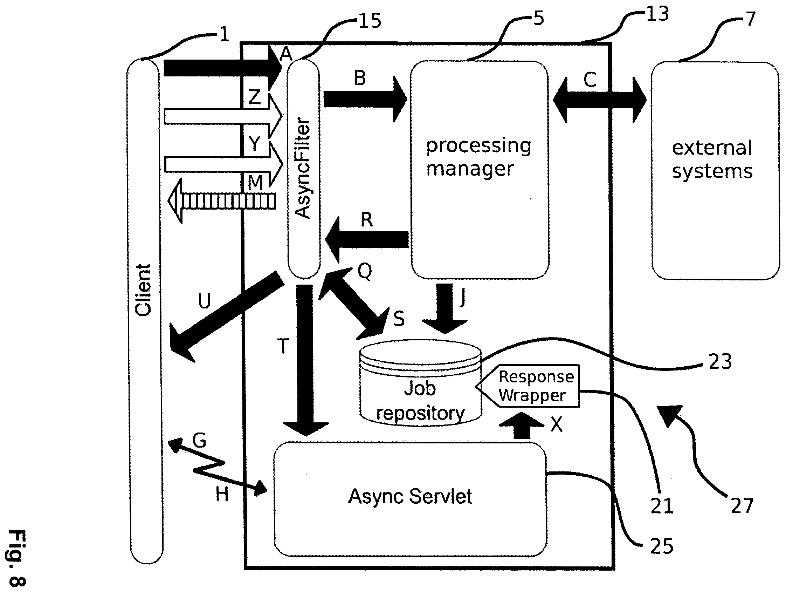

### Fig. 8: Booking-process status information, second type

Fig. 8 illustrates an embodiment similar to that of Fig. 3 in a client-server computer system of the second type shown in Fig. 7. The description of Figures 3 and 7 also applies to Fig. 8 in combination with the additions and variants described in this subsection dealing with Fig. 8.

In response to the first booking request the AsyncFilter 15 sends, as an HTTP response, an HTML document with embedded or referenced mobile program code to the client 1, which is labeled as "U" in Fig. 8. The client 1 executes the mobile program code within its Web browser.

Upon executing the mobile program code the client sends repeated HTTP requests for booking status information, as in Fig. 3, and labeled as "H". The client sends these booking-status requests to the AsyncServlet 25, which means that the client directs its requests form the AsyncFilter 15, to which the first booking request was sent, to the AsyncServlet 25.

Booking response data may be continuously prepared by processing manager 5, as a result of the ongoing booking process initiated by the first booking request, and incrementally stored in the job repository 23, labeled as "J". The AsyncServlet 25 reads the booking-response data from the job repository 23, creates booking status information indicative of a status of the processing of the first booking request from it, and, in response to the requests H, sends the booking status information, which may be in the form of booking status updates, to the mobile program code executed at the client 1, labeled as "G", as in Fig. 3. Thus, the booking status information appears to be pushed by the server 13, but is actually technically pulled by the client 1. In other embodiments a real server push is used, as described in the context of Fig. 3. The mobile program code causes the booking status information to be displayed at the client 1, as in Fig. 3.

As described in connection with Figures 2 and 7, there may also be a repeated booking request (labeled as "Z") while the booking processing initiated by the first booking process is still ongoing. Once the repeated booking request has been sent from the client 1, the execution of the mobile code is terminated.

The AsyncFilter 15 recognizes that the second request is a repetition of the first booking request, and does not forward the booking request to the processing manager 5 to prevent another booking process from being initiated. In response to the receipt of the repeated booking request, while the booking process initiated by the first booking request is still ongoing, the AsyncFilter 15 re-submits the HTML document with the same embedded or referenced mobile program code to the client 1, again labeled as "U" in Fig. 8.

As in Fig. 3, upon receipt of the (same) mobile-program code the execution of the mobile-program code is started in the client's Web browser again. The newly started mobile program code re-accesses and displays the current booking status information, so that the apparent transition between what is displayed to the user before and after a repetition of the booking request will be nearly seamless.

Hence, while the previous booking-status communication took place between the client 1 and the AsyncServlet 25, as indicated by "G" and "H", the repeated booking request is again directed to the AsyncFilter 15, as indicated by "Z". Then, in response to the receipt of the repeated booking request at the AsyncFilter 15, the repeated booking request is redirected to the AsyncServlet 25, where the communication regarding the booking status is resumed between the client 1 and the AsyncServlet 25, as indicated by "G" and "H".

During the processing of the booking initiated by the first booking request, the processing manger 5 stores the prepared response data or a portion of the prepared response data in job repository 23, labeled as "J", as in Fig. 7. Once the booking process has finished the processing manager 5 informs the AsyncFilter 15 about the completion of the booking process status, which may, in turn, inform the AsyncServlet 25, labeled as "R" and "T".

Thereupon, the AsyncServlet 25 sends an output-ready message to the mobile program code executed by client 1. The receipt of the output-ready message causes the mobile program code executing at the client 1 to issue another HTTP request in a new TCP connection, labelled as "Y", in order to obtain the final booking result, as in Fig. 3.

As described in the context of Fig. 3, the other HTTP request may be (i) a repetition of the first booking request, i.e. a mobile-code-issued repeated booking request, or (ii) a booking-result request different from the first booking request.

The other HTTP request is again directed to the AsyncFilter 15. The AsyncFilter 15 intercepts the other HTTP request and recognizes (i) that it is a repetition of the first booking request (but now received after the booking process has been completed), or (ii) that it is a booking-result request referring to the first booking request, e.g. based on a comparison of session identifiers.

In order that the final booking result is provided to the client 1, the AsyncFilter 15 notifies the AsyncServlet 25 of the receipt of the other HTTP request, labeled as "T". Thereupon, the AsyncServlet 25 swaps the final booking result stored in the job repository 23 from the first response object to a new response object which is associated with the new TCP connection established by the client 1 for transmitting the other HTTP request, as described in the context of Fig. 7. The AsyncServlet 25 thereby updates the assignment of a response object to the response wrapper 21, labeled as "X", so that the content of the response wrapper 21 correctly refers the other HTTP request to which the final booking response has to be returned.

The AsyncFilter 15 then reads the final result of the booking process from the job repository 23, labeled as "Q", and sends an HTTP response with the final booking result to the client 1, labeled as "M", on the basis of the updated response wrapper 21. The use of the updated response wrapper ensures that the booking response, which is the result of the first booking request, is correctly transmitted as a response to the other HTTP request. The final booking result is then displayed by the client's Web browser.

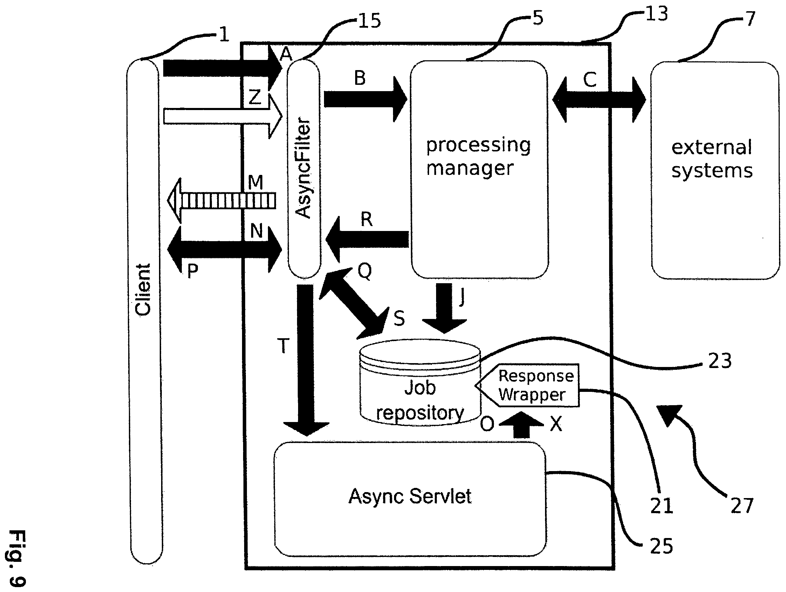

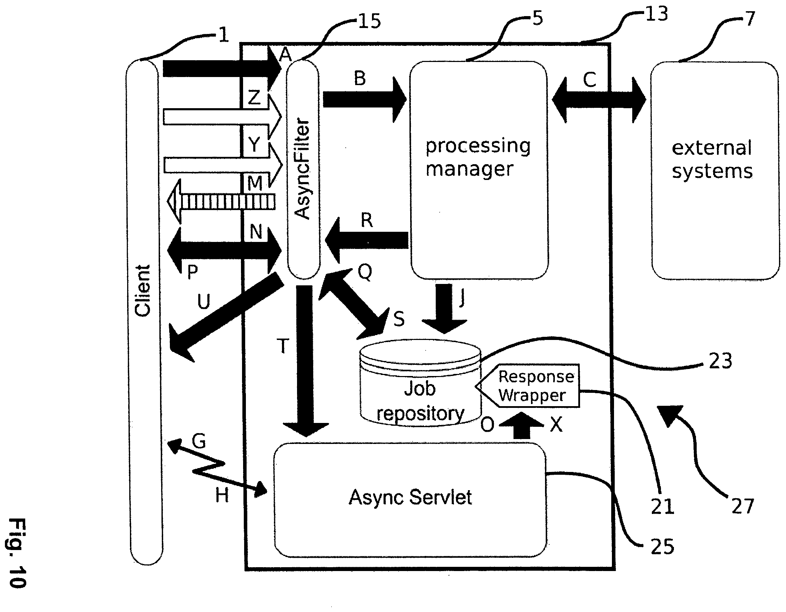

### Figures 9 and 10: Confirmation, second type

Figures 9 and 10 illustrate embodiments similar to those of Figures 4 and 5 in a client-server computer system of the second type shown in Figures 7 and 8, respectively. The description of Figures 4, 5 and 7, 8 also applies to Figures 9, 10 in combination with the additions and variants described in this subsection dealing with Figures 9, 10.

As in Figures 4 and 5, upon receipt of the final booking result labeled as "M" the client 1 returns a confirmation to the server's AsyncFilter 15 that the final booking result has been received and displayed at the client, labeled as "N". The confirmation may be in the form of an HTTP request.

The booking-response data is not immediately discarded from the job repository 23 after having been sent to the client 1. The storage of the booking-response data in the job repository 23 is rather extended to a point of time when the confirmation N is received from the client 1 that the final booking result has been received and displayed at the client 1. In response to the receipt of the confirmation from client 1, the AsyncFilter 15 causes the booking-response data prepared in response to the first booking request to be discarded from the job repository 23. Optionally, the AsyncFilter 15 may send a response to the confirmation to complete the HTTP request-response protocol, labeled as "P".

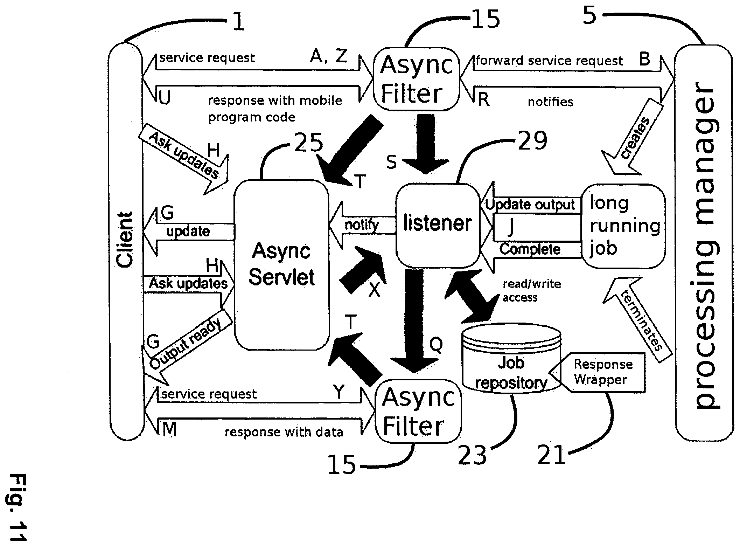

### Fig. 11: Embodiment of a third type

Fig. 11 shows another embodiment similar to the embodiments of Figures 3 and 8, however, in a client-server computer system of a third type. The description of Figures 3 and 8 also applies to Fig. 11 in combination with the additions and variants described in this subsection dealing with Fig. 11.

In comparison with Figure 8 the embodiment of Fig. 11 has an additional functional module, referred to as "listener 29", which mediates between the AsyncFilter 15, the AsyncServlet 25, and the processing manager 5, and manages read- and write-accesses to the job repository 23.

Another difference between the Figures 8 and 11 is only apparent: In Fig. 11, the AsyncFilter 15 is shown twice. Actually, the two boxes labeled as "AsyncFilter 15" represent only one AsyncFilter which is only drawn twice to depict its various functional relations to the other elements more clearly. Various requests H for booking-status updates by the mobile-program code, as in Fig.8 and one update response G as well as an output-ready response G are also explicitly shown in Fig. 11

Upon receipt of a booking request (first or repeated booking request) the AsyncFilter 15 checks via the listener 29 whether a response wrapper 21 already exists in the job repository 23 for this request, e.g. by comparing session identifiers, and creates a new response wrapper 23, if applicable; these activities are labeled as "S" and "Q" in Fig. 11.

Re-assigning, or swapping, an existing response wrapper 21 assigned to the first booking request to the last received booking request, or to a booking-result request, by the AsyncServlet 25 is also performed via the listener 29, labeled as "X".

The processing manager 5 creates the booking process with the aid of external systems (Figures 3 and 8), i.e. the long-running job, and terminates the long-running job when the final booking result is determined. The processing manager 5 provides booking-status information, including booking-status updates and a booking-completion notification to the AsyncServlet 25 via the listener 29. The listener 29 also notifies the AsyncServlet 25 about updating, or swapping, of the response wrapper 21. The processing manager 5 also stores booking-result data, including partial booking results and the final booking result, in the job repository 23 via the listener 29. The listener notifies the AsyncServlet 25 about events and status changes, and also provides the AsyncFilter 15 with partial and/or final booking-result data from the job repository 23 and, if needed, with the associated response wrapper 23.

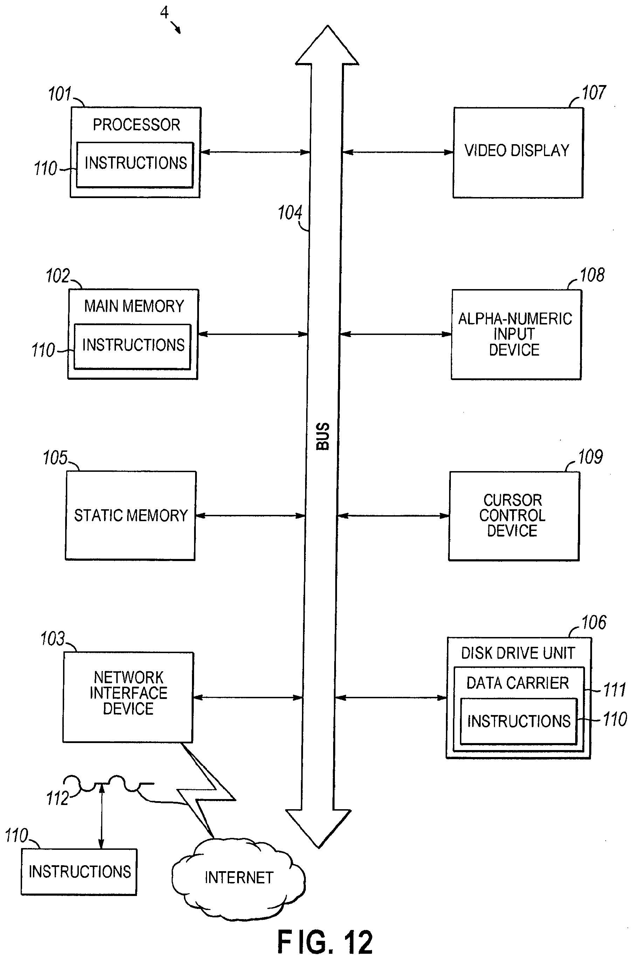

### Fig. 12, Client- and server-computer system

Fig. 12 is a diagrammatic representation of an exemplary server computer system 13. Fig. 12 is also a representation of the client computer 1. The computer system 1, 13 includes a processor 101, a main memory 102 and a network interface 103. It further includes a magnetic or optical disk drive unit 106 with a data carrier 111 and, optionally, a static memory 105, e.g. a non-removable flash, a solid state drive and/or a removable data carrier, which may permanently store the software enabling the computer system 1, 13 to execute its functions. Furthermore, it may include a display 107, an alpha-numeric input device 108 and/or a cursor control device 109. A database, such as the job repository 23, may be stored in the static memory 105; or an external database with the job repository may be accessible via the network interface device 104. Access to the external systems 7 may also be provided via the network interface device 103.

Both the client computer 1 and the server computer system 13 communicate with each other via the Internet via the network interface device 13. Data are physically transmitted over the Internet as propagated signals 112.

Regarding the server-computer system 13, an executable set of instructions 110 representing the server-computer program 110 embodying the functional modules of the server-computer system 13 described in connection with Figures 1 to 12 and the methodologies of the server-computer system 13 described above, resides in the non-volatile memory 111 and, optionally 105 of the server-computer system 13. When executed, a corresponding set of instructions 110 may also reside in the main memory 102 and/or the processor 101 of the server-computer system 13. The instructions 110 included in the mobile program code to be sent to the client via the network interface 103 and the Internet are stored in the non-volatile memory 111 or 105 and, optionally, in the main memory 102 of the server-computer system 13.

Regarding the client computer 1, an executable set of instructions 110 representing the server-computer program 110 embodying the client's Web browser resides in the non-volatile memory 111 and, optionally 105 of the client computer 1. The instructions 110 included in the mobile program code received via the Internet at the network interface 103 are stored in the main memory 102 and, optionally, in the disk drive unit 106/111 of the client computer 1. When executed, the combined instructions 110 of the Web browser and the mobile program code may reside in the main memory 102 and/or the processor 101 of the client computer 1.

Although certain products and methods constructed in accordance with the teachings of the invention have been described herein, the scope of coverage of this patent is not limited thereto. On the contrary, this patent covers all embodiments of the teachings of the invention fairly falling within the scope of the appended claims .

## Claims

1. A method of preventing double processing in response to a repeated HTTP request from a client being a web browser in a transaction session, the method being carried out by a server comprising an intercepting module, a processing manager, a job repository, and a listener, and using a HTTP request-response protocol in a computer network; the method comprising:
providing a session identifier to the web browser;
receiving at the intercepting module a first HTTP request comprising the session identifier from the web browser over the computer network;
processing the first HTTP request, wherein the processing of the first HTTP request comprises initiating the preparation of response data for the web browser;
creating a response wrapper, wherein a first response object is assigned to the response wrapper, wherein the first response object represents a first TCP connection established by the client for transmitting the first HTTP request;
assigning the prepared response data to the first response object;
storing the prepared response data and the response wrapper in the job repository, wherein response data is continuously prepared by the processing manager as a result of the ongoing process initiated by the first HTTP request and incrementally stored in the job repository;
receiving at the intercepting module a second HTTP request comprising the session identifier from the web browser over the computer network;
analysing session identifiers in HTTP requests received from the web browser;
recognising by the server that the second HTTP request is a repeated request, i.e. a repetition of the first HTTP request, which is still outstanding, i.e. to which no response with response data has yet been returned, on the basis of the session identifiers in the first HTTP request and the second HTTP request;
in response to the recognition that the second HTTP request from the web browser is found to be a repetition of the first HTTP request from the web browser, preventing the second HTTP request from causing another processing of the request, wherein preventing from causing another process is achieved by intercepting HTTP requests received by the intercepting module, and comprises:
checking via the listener whether the response wrapper already exists in the job repository for the received second HTTP request by comparing session identifiers,
in response to the existence of the response wrapper:
updating the response wrapper with a second response object representing a second TCP connection established by the client for transmitting the second HTTP request;
performing response swapping by assigning the response data prepared in response to the first HTTP request from the first response object to the second response object; and
returning, by the server in response to the repeated request, a response to the web browser comprising the response data prepared in response to the first HTTP request.

2. The method of claim 1, wherein
the first HTTP request is received in a first transport-protocol connection, and the repeated request is received in another transport-protocol connection different from the first transport-protocol connection, and
the response data prepared in response to the first HTTP request is returned by the server in the other transport-protocol connection.

3. The method of claim 1 or 2, wherein the processing of the first HTTP request further comprises:
sending mobile program code to the web browser over the computer network in response to the first HTTP request;
sending status information indicative of a status of the processing of the first HTTP request over the computer network to the web browser; the status information being displayable by the mobile program code at the web browser.

4. The method of claim 3, wherein the server comprises a status-informing module, the method further comprising:
in response to the receipt of the repeated request at the intercepting module before the processing of the first HTTP request is completed, re-directing the repeated request to the status-informing module.

5. The method of any one of claims 1 to 4, wherein the server comprises a storage, wherein the method further comprises:
maintaining the response data prepared in response to the first HTTP request in storage at the server,
causing the web browser to return a confirmation that the response to the web browser comprising the response data prepared in response to the first HTTP request has been received and displayed,
in response to the receipt of the confirmation from the web browser over the computer network, discarding the response data prepared in response to the first HTTP request at the server.

6. A server computer program for preventing double processing in response to a repeated request from a client in a transaction session in a computer network; the server computer program causing a server computer system to perform the method of any one of claims 1 to 5.

## Patentansprüche

1. Verfahren zum Verhindern von Doppelverarbeitungen in Reaktion auf eine wiederholte HTTP-Anfrage von einem Client, bei dem es sich um einen Webbrowser in einer Transaktionssitzung handelt, wobei das Verfahren von einem Server ausgeführt wird, der ein Abfangmodul, einen Verarbeitungsmanager, ein Aufgabenrepository und einen Listener umfasst, und der in einem Computernetzwerk ein HTTP-Anfragebeantwortungsprotokoll verwendet; wobei das Verfahren Folgendes umfasst:
Bereitstellen einer Sitzungskennung an den Webbrowser;
Empfangen, am Abfangmodul und über das Computernetzwerk, einer ersten HTTP-Anfrage, die die Sitzungskennung umfasst, vom Webbrowser;
Verarbeiten der ersten HTTP-Anfrage, wobei das Verarbeiten der ersten HTTP-Anfrage das Einleiten der Vorbereitung von Antwortdaten für den Webbrowser umfasst;
Erzeugen eines Antwortwrappers, wobei ein erstes Antwortobjekt dem Antwortwrapper zugeordnet wird, wobei das erste Antwortobjekt eine erste TCP-Verbindung repräsentiert, die vom Client zur Übertragung der ersten HTTP-Anfrage eingerichtet wurde;
Zuordnen der vorbereiteten Antwortdaten zum ersten Antwortobjekt;
Speichern der vorbereiteten Antwortdaten und des Antwortwrappers im Aufgabenrepository, wobei die Antwortdaten vom Verarbeitungsmanager als ein Ergebnis des anhaltenden Vorgangs, der von der ersten HTTP-Anfrage eingeleitet wurde, fortlaufend vorbereitet und inkrementell im Aufgabenrepository gespeichert werden;
Empfangen, am Abfangmodul und über das Computernetzwerk, einer zweiten HTTP-Anfrage, die die Sitzungskennung umfasst, vom Webbrowser;
Analysieren der Sitzungskennungen in den vom Webbrowser empfangenen HTTP-Anfragen;
Erkennen durch den Server, dass die zweite HTTP-Anfrage eine wiederholte Anfrage ist, das heißt eine Wiederholung der ersten HTTP-Anfrage, die noch unerledigt ist, das heißt zu der noch keine Antwort mit Antwortdaten zurückgesendet wurde, auf Basis der Sitzungskennungen in der ersten HTTP-Anfrage und der zweiten HTTP-Anfrage;
in Reaktion auf das Erkennen, dass die zweite HTTP-Anfrage vom Webbrowser als eine Wiederholung der ersten HTTP-Anfrage vom Webbrowser festgestellt wurde, Verhindern, dass die zweite HTTP-Anfrage eine weitere Verarbeitung der Anfrage herbeiführt, wobei das Verhindern der Herbeiführung einer weiteren Verarbeitung dadurch erreicht wird, dass vom Abfangmodul empfangene HTTP-Anfragen abgefangen werden, und Folgendes umfassend:
Überprüfen, durch den Listener durch das Vergleichen der Sitzungskennungen, ob für die empfangene zweite HTTP-Anfrage der Antwortwrapper bereits im Aufgabenrepository vorhanden ist,
in Reaktion auf das Vorhandensein des Antwortwrappers:
Aktualisieren des Antwortwrappers mit einem zweiten Antwortobjekt, das eine zweite TCP-Verbindung repräsentiert, die vom Client zur Übertragung der zweiten HTTP-Anfrage eingerichtet wurde;
Ausführen eines Antwortaustauschs, indem die Antwortdaten, die in Reaktion auf die erste HTTP-Anfrage vorbereitet wurden, vom ersten Antwortobjekt dem zweiten Antwortobjekt zugeordnet werden; und
Zurücksenden, durch den Server in Reaktion auf die wiederholte Anfrage, einer Antwort an den Webbrowser, die die Antwortdaten umfasst, die in Reaktion auf die erste HTTP-Anfrage vorbereitet wurden.

2. Verfahren nach Anspruch 1, wobei
die erste HTTP-Anfrage in einer ersten Transportprotokollverbindung empfangen wird und die wiederholte Anfrage in einer weiteren Transportprotokollverbindung empfangen wird, die von der ersten Transportprotokollverbindung verschieden ist, und
die Antwortdaten, die in Reaktion auf die erste HTTP-Anfrage vorbereitet wurden, durch den Server in der weiteren Transportprotokollverbindung zurückgesendet werden.

3. Verfahren nach Anspruch 1 oder 2, wobei das Verarbeiten der ersten HTTP-Anfrage außerdem Folgendes umfasst:
Senden von Mobilprogrammcode über das Computernetzwerk an den Webbrowser in Reaktion auf die erste HTTP-Anfrage;
Senden von Statusinformation, die den Status der Verarbeitung der ersten HTTP-Anfrage repräsentiert, über das Computernetzwerk an den Webbrowser; wobei die Statusinformation durch den Mobilprogrammcode am Webbrowser angezeigt werden kann.

4. Verfahren nach Anspruch 3, wobei der Server ein Statusinformationsmodul umfasst und das Verfahren außerdem Folgendes umfasst:
in Reaktion auf den Empfang der wiederholten Anfrage am Abfangmodul bevor die Verarbeitung der ersten HTTP-Anfrage abgeschlossen ist, Umleiten der wiederholten Anfrage an das Statusinformationsmodul.

5. Verfahren nach einem der Ansprüche 1 bis 4, wobei der Server einen Speicher umfasst und das Verfahren außerdem Folgendes umfasst:
Halten der Antwortdaten, die in Reaktion auf die erste HTTP-Anfrage vorbereitet wurden, in dem Speicher im Server,
Bewirken, dass der Webbrowser eine Bestätigung zurücksendet, dass die Antwort an den Webbrowser, die die Antwortdaten umfasst, die in Reaktion auf die erste HTTP-Anfrage vorbereitet wurden, empfangen und angezeigt wurden,
in Reaktion auf den Empfang der Bestätigung vom Webbrowser über das Computernetzwerk, Verwerfen der Antwortdaten, die in Reaktion auf die erste HTTP-Anfrage vorbereitet wurden, am Server.

6. Servercomputerprogramm zum Verhindern einer Doppelverarbeitungen in Reaktion auf eine wiederholte Anfrage von einem Client in einer Transaktionssitzung in einem Computernetzwerk; wobei das Servercomputerprogramm ein Servercomputersystem dazu veranlasst das Verfahren nach einem der Ansprüche 1 bis 5 auszuführen.

## Revendications

1. Procédé visant à empêcher un double traitement en réponse à une requête HTTP répétée en provenance d'un client qui est un navigateur web dans une session de transaction, le procédé étant effectué par un serveur comprenant un module d'interception, un gestionnaire de traitement, un référentiel de travaux, et un écouteur, et utilisant un protocole requête HTTP-réponse dans un réseau informatique ; le procédé comprenant :
la fourniture d'un identifiant de session au navigateur web ;
la réception au niveau du module d'interception d'une première requête HTTP comprenant l'identifiant de session en provenance du navigateur web sur le réseau informatique ;
le traitement de la première requête HTTP, où le traitement de la première requête HTTP comprend l'initiation de la préparation de données de réponse pour le navigateur web ;
la création d'un enveloppeur de réponse, où un premier objet de réponse est assigné à l'enveloppeur de réponse, où le premier objet de réponse représente une première connexion TCP établie par le client pour transmettre la première requête HTTP ;
l'assignation des données de réponse préparées au premier objet de réponse ;
le stockage des données de réponse préparées et de l'enveloppeur de réponse dans le référentiel de travaux, où des données de réponse sont préparées en continu par le gestionnaire de traitement à la suite du processus en cours initié par la première requête HTTP et stockées incrémentalement dans le référentiel de travaux ;
la réception au niveau du module d'interception d'une seconde requête HTTP comprenant l'identifiant de session en provenance du navigateur web sur le réseau informatique ;
l'analyse d'identifiants de session dans des requêtes HTTP reçues en provenance du navigateur web ;
la reconnaissance par le serveur que la seconde requête HTTP est une requête répétée, c.-à-d. une répétition de la première requête HTTP, qui est toujours en suspens, c.-à-d. pour laquelle aucune réponse avec des données de réponse n'a encore été renvoyée, sur la base des identifiants de session dans la première requête HTTP et la seconde requête HTTP ;
en réponse à la reconnaissance que la seconde requête HTTP en provenance du navigateur web s'avère être une répétition de la première requête HTTP en provenance du navigateur web, le fait d'empêcher la seconde requête HTTP de provoquer un autre traitement de la requête, où le fait d'empêcher de provoquer un autre processus est accompli en interceptant des requêtes HTTP reçues par le module d'interception, et comprend :
la vérification via l'écouteur de si l'enveloppeur de réponse existe déjà dans le référentiel de travaux pour la seconde requête HTTP reçue en comparant des identifiants de session,
en réponse à l'existence de l'enveloppeur de réponse :
la mise à jour de l'enveloppeur de réponse avec un second objet de réponse représentant une seconde connexion TCP établie par le client pour transmettre la seconde requête HTTP ;
la réalisation d'une permutation de réponse en assignant les données de réponse préparées en réponse à la première requête HTTP du premier objet de réponse au second objet de réponse ; et
le renvoi, par le serveur en réponse à la requête répétée, d'une réponse au navigateur web comprenant les données de réponse préparées en réponse à la première requête HTTP.

2. Procédé selon la revendication 1, dans lequel
la première requête HTTP est reçue dans une première connexion de protocole de transport, et la requête répétée est reçue dans une autre connexion de protocole de transport différente de la première connexion de protocole de transport, et
les données de réponse préparées en réponse à la première requête HTTP sont renvoyées par le serveur dans l'autre connexion de protocole de transport.

3. Procédé selon la revendication 1 ou 2, dans lequel le traitement de la première requête HTTP comprend en outre :
l'envoi d'un code de programme mobile au navigateur web sur le réseau informatique en réponse à la première requête HTTP ;
l'envoi d'informations de statut indicatives d'un statut du traitement de la première requête HTTP sur le réseau informatique au navigateur web ; les informations de statut étant affichables par le code de programme mobile au niveau du navigateur web.

4. Procédé selon la revendication 3, dans lequel le serveur comprend un module d'information de statut, le procédé comprenant en outre :
en réponse à la réception de la requête répétée au niveau du module d'interception avant que le traitement de la première requête HTTP ne soit achevé, la redirection de la requête répétée vers le module d'information de statut.

5. Procédé selon l'une quelconque des revendications 1 à 4, dans lequel le serveur comprend un stockage, dans lequel le procédé comprend en outre :
le maintien des données de réponse préparées en réponse à la première requête HTTP dans un stockage au niveau du serveur,
le fait d'amener le navigateur web à renvoyer une confirmation que la réponse au navigateur web comprenant les données de réponse préparées en réponse à la première requête HTTP a été reçue et affichée,
en réponse à la réception de la confirmation en provenance du navigateur web sur le réseau informatique, la suppression des données réponse préparées en réponse à la première requête HTTP au niveau du serveur.

6. Programme informatique de serveur pour empêcher un double traitement en réponse à une requête répétée en provenance d'un client dans une session de transaction dans un réseau informatique ; le programme informatique de serveur amenant un système informatique de serveur à réaliser le procédé selon l'une quelconque des revendications 1 à 5.
